# EUROPEAN PATENT SPECIFICATION

(11) **EP 2 397 385 B1**
(45) Date of publication and mention of the grant of the patent: **06.03.2013**
(21) Application number: 10425203.6
(22) Date of filing: 16.06.2010
(51) Int. Cl.: B60W 10/06, B60W 10/08, B60W 10/02, B60W 20/00, B60K 6/48, B60W 50/02, B60L 3/00, B60L 11/14, B60L 15/20

(54) **Method for controlling a parallel hybrid driving system for a vehicle equiped with a manual transmission and corresponding drivind system**
System zur Steuerung ein Parallelhybridsystem für ein Fahrzeug mit Handschaltgetriebe
Méthode pour le contrôle d'un système de propolsion hybride parallèle pour un véhicule équipé d'une boîte de vitesse manuelle et système de propulsion correspondant

(43) Date of publication of application: 21.12.2011
(73) Proprietor: ALTRA S.P.A., 16141 Genova (IT)
(72) Inventor: Mantovani, Giorgio, 17015 Celle Ligure (IT)
(74) Representative: Borsano, Corrado

(56) References cited:
- EP-A1- 0 768 204
- EP-A2- 1 034 957
- EP-A2- 1 288 051
- DE-A1- 4 123 843
- DE-A1-102008 042 887
- GB-A- 2 413 999
- US-A- 5 176 213
- US-A1- 2007 102 930
- US-B1- 6 209 672

## Description

### Application field of the invention

The present invention relates to a method for controlling a parallel hybrid driving system, and corresponding hybrid system, for a vehicle equipped with manual-shift gear box, especially an industrial or commercial vehicle suitable to be used primarily in urban areas, and more precisely in a vehicle equipped with hybrid driving of the parallel type, with single clutch.

### Description of the prior art

A type of industrial or commercial vehicle equipped with hybrid traction of the parallel type is known in the art, comprising a internal combustion engine, an electric engine-generator, equipped with a DC/AC inverter and with a high-tension electric traction battery, a clutch unit placed between the two engines, and a transmission system comprising a traditional manual-shift gear box.

In such type of vehicles some operating modes are known in the art, which include controlling the separate activation or deactivation of the internal combustion engine or of the electric motor-generator, or their simultaneous functioning in hybrid mode (electric power boost): in the latter case the power required to move the vehicle is provided by the combination of electric motor and internal combustion engine contributions.

The regenerative braking function is also known in the art: the kinetic energy of the vehicle is converted, during the braking phases, into electric energy by the electric motor-generator and is stored in the high voltage electric traction battery by means of the inverter.

Especially in case of prevalent use of such vehicle in urban areas, it is necessary to improve its functionalities as regards above all the reduction of fuel consumption and of pollutant emissions, as well as of noise emissions, for example by increasing the time percentage in which the electric motor provides for the driving and the internal combustion engine is stopped.

EP 1 034 957 A2 describes a method for controlling a parallel hybrid driving system for a vehicle equipped with manual-shift gear box (6), clutch (3), internal combustion engine (1), electric motor-generator (2), traction batteries and a system managing the traction battery and an inverter, the method being suitable for controlling the functioning of the driving system according to a hybrid mode and an electric mode, and comprising the steps of:
- determining at the starting of the internal combustion engine (1) the functioning in hybrid mode, conditional upon a first fault verification in said electric engine-generator (2) ;
- determining the shifting to said electric mode, manual driven, wherein the internal combustion engine (1) is stopped, if:
- the vehicle's speed is lower than a first threshold;
- manual-shift gear box (6) is in neutral;
- the status of charge of the traction batteries is higher than a minimum percentage value (SOCₘᵢₙ);

otherwise the hybrid mode is maintained or there is a shifting to the hybrid mode by acting on the clutch.

Problems thus arise in relation to the management of the operating logic of such parallel hybrid driving system, also due to the presence of a single clutch unit, and also in relation to the reduction of costs and complexity of the mechanical scheme.

### Summary of the invention

Therefore the aim of the present invention is to provide a method for controlling a parallel hybrid driving system for a vehicle equipped with manual-shift gear box, and corresponding driving system, suitable to overcome all the drawbacks mentioned above.

It is object of the present invention, according to claim 1, a method for controlling a parallel hybrid driving system for a vehicle equipped with manual-shift gear box, clutch, internal combustion engine, electric motor-generator and traction batteries, the method being suitable for controlling the functioning of the driving system according to a hybrid mode and an electric mode, and comprising the steps of:
- determining the functioning in hybrid mode at the starting of the internal combustion engine, conditional upon first fault verification in said electric motor-generator;
- determining the shifting to said electric mode, manually driven, wherein the internal combustion engine is stopped, if:
- the vehicle's speed is lower than a first threshold;
- the manual-shift gear box is in neutral;
- the status of charge of the traction batteries is higher than a minimum percentage value;
- no faults are detected;
otherwise the hybrid mode is maintained or there is a shifting to the hybrid mode by acting on the clutch.

The object of the present invention is in particular a method for controlling a parallel hybrid driving system for a vehicle equipped with manual-shift gear box, and corresponding driving system, as described more fully in the claims, which are an integral part of this description.

### Brief description of the Figures

Further purposes and advantages of the present invention will become clear from the following detailed description of a preferred embodiment (and its alternative embodiments) and the drawings that are attached hereto, which are merely illustrative and non-limitative, in which:
figure 1 shows a general scheme of a parallel hybrid driving system of a vehicle suitable to realize the method according to the invention;
figures 2, 3 and 4 show the operating flowchart of the control method that is object of the invention, respectively referring to the starting steps of the vehicle, its functioning in hybrid and in electric mode.

### Detailed description of the invention

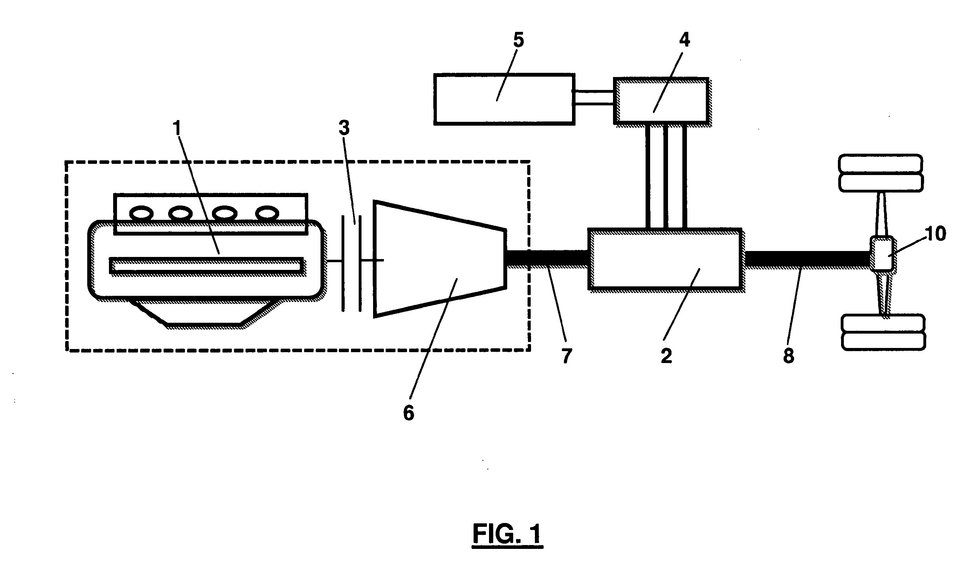

With reference to figure 1, a parallel hybrid driving system comprises a internal combustion engine 1, an electric motor-generator 2, equipped with a DC/AC inverter 4 and with a high-voltage electric traction battery 5, a clutch unit 3, and a transmission system 6 comprising a traditional manual-shift gear box. The clutch 3 is placed between the internal combustion engine 1 and the transmission system 6, while the electric motor-generator 2 is placed downstream of the transmission system 6, on the shaft transmitting the torque to the bridge 10 of the driving axle.

The electric motor-generator 2 is preferably placed between two segments 7 and 8 of the transmission shaft by means of flanges. Thus it is even possible to adapt a driving system scheme which originally did not include any electric motor-generator, since it is just necessary to break up the transmission shaft into two parts, without introducing further components, such as gears, to reduce or to adapt the input and output rpm of the electric engine-generator. It is sufficient that the electric motor-generator has appropriate dimensions, so that it has low power, but very high torque, since it is connected to a shaft working at low rpm. Thus it is possible to reduce manufacturing costs and obtain an easy-to-manufacture system.

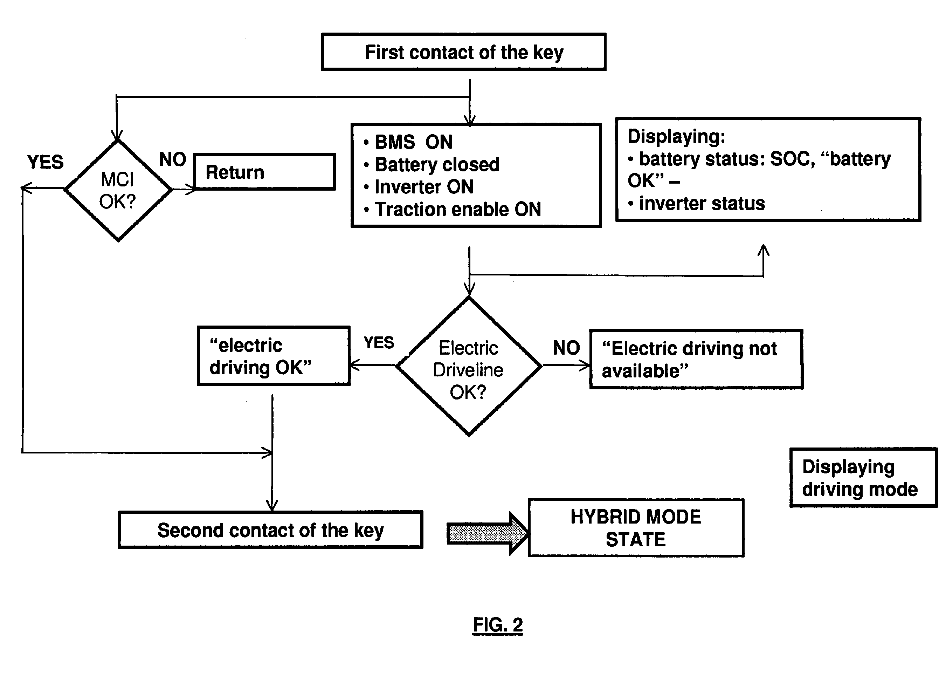

With reference to figures 2, 3 and 4, the method for controlling the parallel hybrid driving system of the vehicle equipped with manual-shift gear box, that is object of the invention, is described in the following.

In order to actuate the method, there is a control logic, stored in one or more electronic control units that may at least in part be already present on the vehicle, with appropriate computer programs.

For example, the control logic includes a control unit controlling the functioning of the electric motor-generator, which performs a bidirectional dialogue with a vehicle's control unit which dialogues in its turn with a control unit of the internal combustion engine.

The control logic has at its disposal the indications coming from a control unit of the traction battery, with the indication SOC of the battery status of charge.

The signals indicating the position of the accelerator pedal and of the clutch pedal are also available to the control unit. In particular, as regards the accelerator pedal the information on the speed of the position variation is also available; as regards the clutch pedal only an indication of the ON/OFF type, pedal completely released or completely pressed, is available.

In general, the control method provides to give priority to the hybrid mode when the vehicle is used in extra-urban areas and to give priority to the only electric mode when the vehicle is used in urban areas.

With reference to figure 2, at the first contact of the ignition key, the logic performs a control of the internal combustion engine and verifies if the internal combustion engine has any fault (MCI OK): in case of a fault, the logic provides a message asking to return to the repair shop (Return), because of faults of the internal combustion engine.

Moreover, always at the first contact of the ignition key, the logic verifies if: the system managing the traction battery is on (BMS ON), and if the inverter is on (Inverter ON). Then it verifies if batteries and inverter have errors or faults, if the status of charge (SOC) is higher than a predefined value, if the pre-charging procedure was successful and closed the power circuit of the batteries.

These controls generate their respective warnings on a display at the driver's disposal: for example the status of charge of the battery (SOC), namely the percentage of instantaneous charge, if it is working (battery OK), and the state of the inverter.

Said controls are integrated by a more general control of the status or the electric driving system (Electric Driveline OK). If it is negative, the message "Electric driving not available" is provided; on the contrary, if it is positive, the message provided is "Electric driving OK". Thus the logic generates the second contact of the key.

If these controls are positive, the driving key is set in hybrid mode when the vehicle is started.

The driving operating conditions are the following:
- the status of charge of the traction battery SOC has to be higher than a threshold SOCₜₕ , for example = 50%, below which the electric motor-generator cannot function as motor but only as electric generator;
- the control of the state of the clutch pedal is disabled;
- the regenerative braking function provided by the electric motor-generator is enabled;
- it is also possible to enable a function called "freewheeling", which automatically stops the internal combustion engine when the vehicle's speed is lower than a threshold Vₜ, for example 50 km/h, if the gear shift is in neutral.

In hybrid mode the function "torque booster" is enabled wherein the electric engine may provide an additional torque with respect to the one generated by the internal combustion engine.
The "Torque booster" C_{EM} = f (SOC), namely the torque increase generated by the electric motor, is dependent on the status of charge of the battery.
Moreover the torque delivered by the electric motor depends also on the position of the accelerator pedal C_{EM} = f (Δa%), and on its derivative over time C_{EM =} f (Δa%/ Δt), namely the speed variation of the position, so that the entity of the increase of the torque generated by the electric motor depends also on the driving conditions determined by the driver and on the vehicle's speed.

Therefore in hybrid mode the driving type may be determined either by the internal combustion engine only, or by the electric motor only, or by both, in "Torque booster" mode.

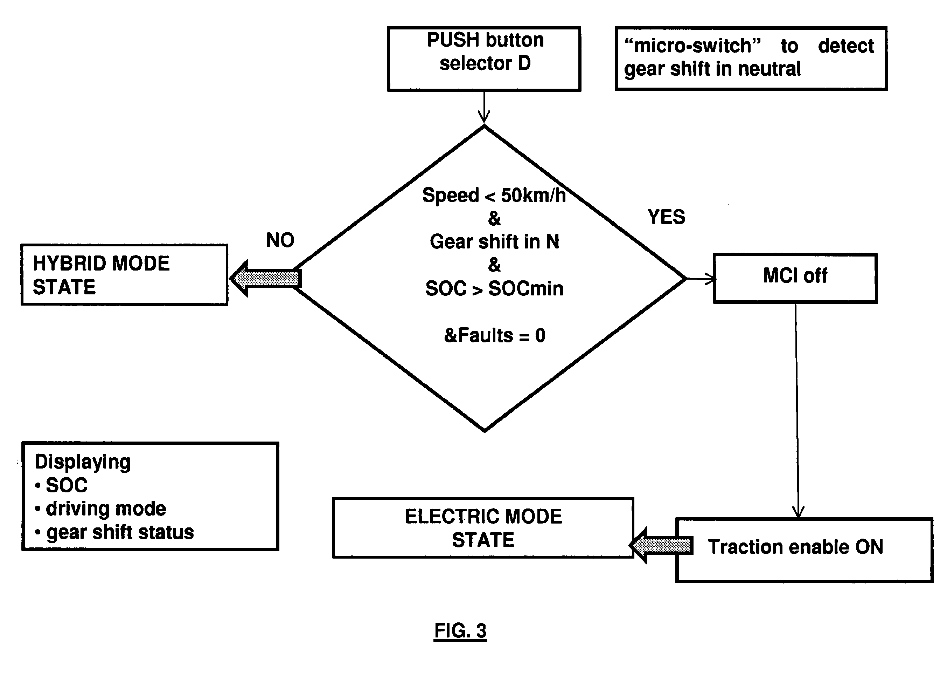

With reference to figure 3, it is possible to shift from the hybrid to the electric mode, by means of a manual-driven control, for example when travelling in urban areas. The driver may act on a button or on a switch on the dashboard (PUSH button selector D) in order to activate the "electric only" mode. In these conditions, the control logic verifies the enabling conditions of this mode. In particular:
- if the vehicle's speed is lower than a threshold, for example 50 km/h or a different threshold;
- if the manual-shift gear box, controlled by the driver is in neutral (gear shifting in N); thus a micro-switch is present in order to detect the position in neutral of the gear shifting;
- if the status of charge SOC of the traction batteries is higher than a minimum percentage value SOCₘᵢₙ, for example 25% of the highest value;
- if no faults are detected (Faults = 0).
Then the logic enables the switching to the electric mode, wherein the internal combustion engine is stopped (MCI off), otherwise the vehicle keeps working in hybrid mode. Also these controls generate their respective warnings on a display available to the driver.
In electric mode (Traction enable ON) the logic continually controls:
- if the speed is lower than the threshold;
- if the status of charge of the traction battery is higher than SOCₘᵢₙ ;
- if the gear shift is in neutral:
- if the clutch pedal is in OFF state, so that if it is operated, the vehicle switches to the hybrid mode. Moreover the logic enables the regenerative braking function of the electric motor-generator, and enables the electric traction with a generation of the traction torque that is proportional to the pressure on the accelerator pedal.

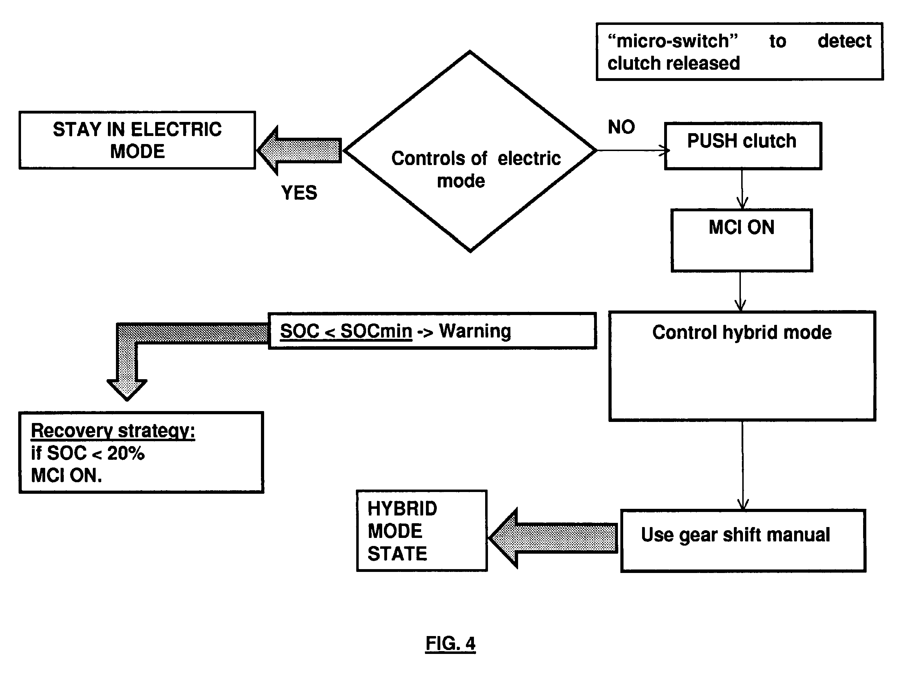

With reference to figure 4, the driving system remains in electric mode if the previous controls continue to be positive.

The vehicle is automatically switched back to the hybrid mode when the previous controls are no longer positive, or it is manually switched to the hybrid mode by the driver which act on the clutch pedal (PUSH CLUTCH) (a micro-switch is present which detect if the clutch is released or pressed), or if the status of charge of the traction battery becomes lower than a minimum value, for example the value SOCₘᵢₙ mentioned above, or a different value, for example 20%.

In this case the internal combustion engine is started again (MCI ON) and the driver acts on the gear shift (manually shifts gear) activating again the hybrid mode. The control logic is also able to manage emergency situations.

In case of electric mode, it verifies the cases of faults of the electric drive and of the vehicle: in this case it starts the driving of the internal combustion engine only. In case of hybrid mode, it verifies the cases of faults of the internal combustion engine and of the vehicle: in this case it starts a traction by means of the electric motor only.

The present invention may advantageously be realized by means of computer programs loaded on the various electronic control units of the vehicle, which comprises program code means performing one or more steps of said method, when said program is run on a computer. For this reason the scope of the present patent is meant to cover also said computer programs and the computer-readable means that comprise a recorded message, such computer-readable means comprising the program code means for performing one or more steps of such method, when such programs are run on a computer.

It will be apparent to the person skilled in the art that other alternative and equivalent embodiments of the invention can be conceived and reduced to practice without departing from the scope of the invention.

From the description set forth above it will be possible for the person skilled in the art to embody the invention with no need of describing further construction details.

## Claims

1. Method for controlling a parallel hybrid driving system for a vehicle equipped with manual-shift gear box (6), clutch (3), internal combustion engine (1), electric motor-generator (2), traction batteries and a system managing the traction batteries and an inverter, the method being suitable for controlling the functioning of the driving system according to a hybrid mode and an electric mode, and comprising the steps of:
- determining at the starting of the internal combustion engine (1) the functioning in hybrid mode, conditional upon a first fault verification in said electric engine-generator (2);
- always at the first contact of the ignition key, verifying if the system managing the traction batteries is on (BMS ON), and if the inverter is on (Inverter ON);
- determining the shifting to said electric mode, manual driven, wherein the internal combustion engine (1) is stopped, if:
- the vehicle's speed is lower than a first threshold;
- manual-shift gear box (6) is in neutral;
- the status of charge of the traction batteries is higher than a minimum percentage value (SOCₘᵢₙ);
- if no faults are detected (Faults = 0);
otherwise the hybrid mode is maintained or there is a shifting to the hybrid mode by acting on the clutch.

2. Method according to claim 1, in which said hybrid mode comprises the steps of:
- verifying that the status of charge (SOC) of the traction battery is higher than a threshold (SOCₜₕ) , below which the electric motor-generator cannot function as motor but only as electric generator;
- enabling the regenerative braking function provided by the electric motor-generator;
- enabling the "torque booster" function wherein the electric motor-generator is suitable to provide additional torque to the one generated by the internal combustion engine, said additional torque being proportional to said status of charge (SOC) of the traction battery and being dependent on the position of the accelerator pedal (C_{EM} = f (Δa%)), and on its derivative over time (C_{EM} = f (Δa%/ Δt)) and on the vehicle's speed.

3. Method according to claim 2, wherein said hybrid mode comprises the step enabling a "freewheeling" function, wherein the automatic stopping of the internal combustion engine is determined if the vehicle's speed is lower than a threshold (Vₜ) with the gear shift in neutral.

4. Method according to claim 1, in which said first fault verification comprises: verification that the management system of the traction batteries is working; verification of the state of the electric traction system.

5. Parallel hybrid driving system for a vehicle equipped with manual-shift gear box (6), wherein said electric motor-generator (2) is placed downstream of said manual-shift gear box (6) on the transmission shaft (7, 8), and said system comprises a control logic suitable to realize the method of any of the previous claims.

6. Computer program comprising program code means suitable for performing the steps of any claim from 1 to 4, when such program is run on a computer.

7. Computer-readable means comprising a recorded program, said computer-readable means comprising program code means suitable for performing the steps according to the claims from 1 to 4, when said program is run on a computer.

## Patentansprüche

1. Verfahren zum Steuern eines Parallel-Hybridantriebssystems für ein Fahrzeug, das mit einem Handschaltgetriebe (6), einer Kupplung (3), einer Brennkraftmaschine (1), einem elektrischen Motor-Generator (2), Traktionsbatterien und einem System, das die Traktionsbatterien verwaltet, und einem Umrichter ausgestattet ist, wobei das Verfahren zum Steuern der Funktionsweise des Antriebssystems gemäß einem Hybridmodus und einem elektrischen Modus geeignet ist und die Schritte umfasst, dass:
- beim Start der Brennkraftmaschine (1) die Funktionsweise in einem Hybridmodus unter der Bedingung einer ersten Störungsverifikation in dem elektrischen Maschinen-Generator (2) ermittelt wird;
- immer beim ersten Kontakt des Zündschlüssels verifiziert wird, ob das System, das die Traktionsbatterien verwaltet, eingeschaltet ist (BMS ON), und ob der Umrichter eingeschaltet ist (Inverter ON);
- das Schalten in den elektrischen Modus, manuell angetrieben, ermittelt wird, wobei die Brennkraftmaschine (1) gestoppt wird, wenn:
- die Geschwindigkeit des Fahrzeugs niedriger als ein erster Schwellenwert ist;
- das Handschaltgetriebe (6) im Leerlauf ist;
- der Ladezustand der Traktionsbatterien höher als ein minimaler prozentualer Wert (SOCₘᵢₙ) ist;
- keine Störungen detektiert werden (Faults = 0);
ansonsten der Hybridmodus aufrechterhalten wird oder es ein Schalten in den Hybridmodus gibt, indem auf die Kupplung eingewirkt wird.

2. Verfahren nach Anspruch 1,
bei dem der Hybridmodus die Schritte umfasst, dass:
- verifiziert wird, dass der Ladezustand (SOC) der Traktionsbatterie höher als ein Schwellenwert (SOCₜₕ) ist, unter welchem der elektrische Motor-Generator nicht als Motor sondern nur als elektrischer Generator fungieren kann;
- die Energierückgewinnungs-Bremsfunktion, die durch den elektrischen Motor-Generator vorgesehen wird, freigegeben wird;
- die "Drehmomentverstärker"-Funktion freigegeben wird, wobei der elektrische Motor-Generator geeignet ist, zusätzliches Drehmoment zu dem, das durch die Brennkraftmaschine erzeugt wird, bereitzustellen, wobei das zusätzliche Drehmoment proportional zu dem Ladezustand (SOC) der Traktionsbatterie ist und von der Position des Gaspedals (C_{EM} = f (Δa%)), und von seiner Ableitung nach der Zeit (C_{EM} = f (Δa%/Δt)) und von der Geschwindigkeit des Fahrzeugs abhängt.

3. Verfahren nach Anspruch 2
wobei der Hybridmodus den Schritt umfasst, dass eine "Freilauf'-Funktion freigegeben wird, wobei das automatische Stoppen der Brennkraftmaschine ermittelt wird, wenn die Geschwindigkeit des Fahrzeugs mit dem Gangschalten im Leerlauf niedriger als ein Schwellenwert (Vt) ist.

4. Verfahren nach Anspruch 1,
bei dem die erste Störungsverifikation umfasst: Verifikation, dass das Verwaltungssystem der Traktionsbatterien arbeitet; Verifikation des Zustandes des elektrischen Traktionssystems.

5. Parallel-Hybridantriebssystem für ein Fahrzeug, das mit einem Handschaltgetriebe (6) ausgestattet ist, wobei der elektrische Motor-Generator (2) stromabwärts von dem Handschaltgetriebe (6) auf der Getriebewelle (7, 8) angeordnet ist und das System eine Steuerlogik umfasst, die geeignet ist, das Verfahren nach einem der vorhergehenden Ansprüche zu realisieren.

6. Computerprogramm, das Programmcodemittel umfasst, die geeignet sind, die Schritte eines jeden der Ansprüche 1 bis 4 durchzuführen, wenn ein solches Programm auf einem Computer laufen gelassen wird.

7. Computerlesbares Mittel, das ein aufgezeichnetes Programm umfasst, wobei das computerlesbare Mittel Programmcodemittel umfasst, die geeignet sind, die Schritte nach den Ansprüchen 1 bis 4 durchzuführen, wenn das Programm auf einem Computer laufen gelassen wird.

## Revendications

1. Procédé de commande d'un système d'entraînement hybride parallèle pour un véhicule équipé d'une boîte de vitesse manuelle (6), d'un embrayage (3), d'un moteur à combustion interne (1), d'un moteur-générateur électrique (2), de batteries de traction et d'un système de gestion des batteries de traction et d'un inverseur, le procédé convenant pour commander le fonctionnement du système d'entraînement en accord avec un mode hybride et un mode électrique, et comprenant les étapes de :
déterminer au démarrage du moteur à combustion interne (1) le fonctionnement en mode hybride, en fonction d'une première vérification de défaillance dans ledit moteur-générateur électrique (2), toujours au premier contact de la clef d'allumage, vérifier si le système de gestion des batteries de traction est en service (BMS ON), et si l'inverseur est en service (Inverseur ON) ;
déterminer le changement audit mode électrique, entraîné manuellement, dans lequel le moteur à combustion interne (1) est arrêté, si :
la vitesse du véhicule est inférieure à un premier seuil ;
la boîte de vitesse manuelle (6) est en position neutre ;
l'état de charge des batteries de traction est plus élevé qu'une valeur de pourcentage minimum (SOCₘᵢₙ) ;
si des défaillances ne sont pas détectées (défaillances = 0) ;
sinon, le mode hybride est conservé ou bien il y a un changement au mode hybride par l'actionnement de l'embrayage.

2. Procédé selon la revendication 1, dans lequel ledit mode hybride comprend les étapes de :
- vérifier que l'état de charge (SOC) de la batterie de traction est plus élevé qu'un seuil (SOCₜₕ) en dessous duquel le moteur-générateur électrique ne peut pas fonctionner comme moteur mais seulement comme générateur électrique ;
valider la fonction de freinage régénérative réalisée par le moteur-générateur électrique ;
valider la fonction « amplification du couple » où le moteur-générateur électrique est apte à fournir un couple additionnel à celui créé par le moteur à combustion interne, ledit couple additionnel étant proportionnel audit état de charge (SOC) de la batterie de traction et dépendant de la position de la pédale d'accélérateur (C_{EM} = f (Δa%)), et de sa dérivée sur le temps (C_{EM} = f (Δa%/Δt)) et de la vitesse du véhicule.

3. Procédé selon la revendication 2, dans lequel ledit mode hybride comprend l'étape permettant une fonction « en roue libre » dans laquelle l'arrêt automatique du moteur à combustion interne est déterminé si la vitesse du véhicule est inférieure à un seuil (Vₜ), le changement de vitesse étant en position neutre.

4. Procédé selon la revendication 1, dans lequel ladite première vérification de défaillance comprend : la vérification que le système de gestion des batteries de traction fonctionne ; la vérification de l'état du système de traction électrique.

5. Système d'entraînement hybride parallèle pour un véhicule équipé d'une boîte de vitesses manuelle (6), dans lequel ledit moteur-générateur électrique (2) est placé en aval de ladite boîte de vitesse manuelle (6) sur l'arbre de transmission (7, 8), et ledit système comprend une logique de commande apte à réaliser le procédé selon l'une quelconque des revendications précédentes.

6. Programme d'ordinateur comprenant un moyen de code programme apte à exécuter les étapes selon l'une quelconque des revendications 1 à 4, lorsqu'un tel programme est exécuté sur un ordinateur.

7. Support lisible par ordinateur comprenant un programme enregistré, ledit support lisible par ordinateur comprenant un moyen de code programme apte à exécuter les étapes selon les revendications 1 à 4, lorsque ledit programme est exécuté sur un ordinateur.
